Europäisches Patentamt

European Patent Office

Office européen des brevets

(19)

(11) Publication number: **0 012 314**
**B1**

(12) **EUROPEAN PATENT SPECIFICATION**

(45) Date of publication of patent specification: **09.03.83**

(51) Int. Cl.³: **B 21 D 51/46**

(21) Application number: **79104847.3**

(22) Date of filing: **03.12.79**

(54) Method and apparatus for forming a liner in a container closure.

(30) Priority: **06.12.78 JP 149937/78**

(43) Date of publication of application:
**25.06.80 Bulletin 80/13**

(45) Publication of the grant of the patent:
**09.03.83 Bulletin 83/10**

(84) Designated Contracting States:
**BE CH DE FR GB IT NL SE**

(56) References cited:
**FR - A - 2 227 999**
**FR - A - 2 312 353**
**GB - A - 1 043 881**
**US - A - 1 451 470**
**US - A - 2 391 341**
**UA - A - 3 038 507**
**UA - A - 3 074 810**
**US - A - 3 343 211**
**US - A - 3 407 442**
**US - A - 3 635 619**
**UA - A - 3 873 258**
**US - A - 4 010 703**
**US - A - 4 070 885**

(73) Proprietor: **JAPAN CROWN CORK CO. LTD.**
**31-5 Shinbashi 4-chome**
**Minato-ku, Tokyo (JP)**

(72) Inventor: **Murayama, Kashiwa**
**3263-8 Fujisawa**
**Fujisawa-shi Kanagawa-ken (JP)**

(74) Representative: **Patentanwälte Beetz sen. - Beetz**
**jun. Timpe - Siegfried - Schmitt-Fumian et al,**
**Steinsdorfstrasse 10**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

## Method and apparatus for forming a liner in a container closure

Field of the Invention

This invention relates to a method for forming a liner in a container closure, which comprises conveying a container closure (4) to a liner stock feeding position, extruding a liner stock in the heated and molten state into an annular shape by an extruder, positioning the annular liner stock at a predetermined location in the container closure, molding the annular liner stock positioned in the container closure into the desired shape while it is still in the molten state, and cooling the annular liner stock by circulating a cooling medium within a molding tool while the annular liner stock is being molded.

Further the invention relates to apparatus for forming a liner in a container closure comprising the features of the preamble of the claims 4 and 8.

It is important to form a linear of the desired shape in a container closure such as crown caps, screw caps or easily openable closures of various types in order to achieve good sealing between the closure and the opening end portion of a container such as bottles and cans.

A conventional method for forming such a liner in a container closure, which is in commercial use, comprises extruding a liner stock in the heated and molten state composed of a thermoplastic resin such as a polyolefin or a vinyl chloride resin into a nearly spherical or cylindrical form from an extruder, feeding it to the center of the central panel portion of the container closure, and then molding the liner stock into the desired shape while it is still in the hot and molten state (see, for example, Japanese Patent Publication No. 15447/61, Japanese Utility Model Publication No. 3515/72, and Japanese Laid-Open Patent Publications Nos. 110176/77 and 89583/78).

The conventional method, however, has important problems that have to be solved. Generally, that part of a container closure which essentially requires the presence of a liner is its peripheral edge portion corresponding to the opening end of a container. Hence, the shape of the essential part of the liner is annular. In the conventional method, however, the liner stock extruded from the extruder is roughly spherical or cylindrical, and such a liner stock is fed to the center of the central panel portion of the closure. This makes it necessary the cause a greater part of the liner stock to flow to the peripheral edge of the container closure when molding the liner stock. It has been found in practice that especially when the container closure is of a relatively large diameter, it is extremely difficult to cause a greater part of the liner material to flow to the peripheral edge of the container closure. When the molten liner stock is to be molded into the desired shape, it is generally necessary to cool a molding tool, etc. Cooling will in turn result in the cooling of the heated and molten liner stock, and thus cause a reduction in its flowability. Even if a greater part of the liner stock can be caused to flow well to the peripheral edge of the closure as desired during the molding process, the flowing of the liner stock tends to result in a radial orientation of the liner stock. Thus, when a load is exerted on the liner during or after mounting the closure on a container after the liner stock has been fully molded into the desired shape and cooled, cracks in a radial form tend to occur in the liner to reduce its function. This is a serious problem. Moreover, even when a greater part of the liner stock can be caused to flow well to the peripheral edge of the closure as desired during the molding process, a considerable amount of the liner stock still remain at the center of the central panel portion of the closure, and therefore is wasted. This economical problem is also of great concern.

A method was also suggested in the past which comprises molding a liner stock into an annular or wheel-like pre-formed liner, feeding the pre-formed liner into a container closure, heating the pre-formed liner until it is melted, and then molding it into the desired shape (see, for example, Japanese Laid-Open Patent Publications Nos. 45186/72 and 40355/74). This conventional method, however, is complicated in the liner-forming process because it requires additional steps of pre-forming a liner stock into a preformed liner of a certain shape, and of heating the pre-formed liner fed into the container closure before it is molded. In the conventional method, the pre-formed liner which has been formed into the desired shape by cooling is again heated before the molding step, and after the molding step, it is again cooled. This poses another problem that repeated heating and cooling degrade the properties of the resin which constitutes the liner.

The US—A—1 451 470 discloses a method and an apparatus for forming a liner in a container closure, which comprises conveying a container closure to a liner stock feeding section and extruding a liner stock in the heated and molten state into an annular shape by an extruder. After that the annular liner stock is positioned at a predetermined location in the container closure and is molded in the desired shape while it is in the molten state. The liner stock is cooled by a cooling medium which circulates in the molding tool. The positioning and molding of the annular liner stock are performed in one and the same section at the same time and with the same tool. For this reason the shape of the end portion of the tool must be the one, which is efficiently capable of performing and positioning or the shearing operation. Therefore it is impossible to make the shape of the end portion of the tool suitable for molding the liner stock in a desirable shape in view of the sealing property of the liner. Further it is impossible to control the temperature of the annular liner stock in a specific temperature range, which is different from that of the annular liner stock at the time when it is extruded and positioned in the container closure. Another drawback of this method is that the container closure is not preheated before the liner stock is positioned so that the fluidity of the liner stock is lowered which causes difficulty in molding the liner stock in the desired shape and adhering the liner stock on the container closure. Also there is a fear of causing cracks on the annular liner stock.

It is an object of the invention to provide a method and apparatus for forming a liner in a container closure which improves the properties of the liner and avoids an undesirable cooling of the liner stock.

The solution of this object is characterized in that the container closure is conveyed to a liner stock feeding section where the annular liner stock is positioned in the container closure, the container closure having the annular liner stock therein is then conveyed from the liner stock feeding section to a liner stock molding section where the annular liner stock is molded into the desired shape, and the container closure is heated before the annular liner stock is positioned therein.

Summary of the Invention

Since according to the method of the invention there is no need to cause a greater part of the liner stock to flow greatly during the molding step, the liner stock can be molded without orienting it radially or otherwise. This, in turn, obviates the likelihood of crack formation in the liner which is due to the radial orientation of the liner stock. Furthermore, since the molten liner stock is positioned at a certain locality in the container closure, the amount of the liner stock positioned at the center of the closure after the molding can be minimized or, if desired, reduced to zero. The amount required of the liner stock can therefore be minimized. Moreover, since the method of this invention involves extruding the liner stock in the heated and molten state, positioning it at a specified location within the container closure, and molding the liner stock into the desired shape while it is still hot and molten, the present invention does not require additional steps of molding the liner stock into a pre-formed liner of the desired shape, and of heating the pre-formed liner fed into the container closure before it is molded. Another advantage is that since there is no need to cool and heat the liner stock repeatedly, the properties of the liner stock are not degraded.

The invention further relates to an apparatus for forming a liner in a container closure, comprising a container closure conveying means for conveying container closures to be lined through a predetermined passage; an extruder for extruding a liner stock in the heated and molten state in an annular shape into a container closure conveyed to a liner stock feeding position by said conveying means and for positioning the annular liner stock in a predetermined location in the closure, said extruder including heating means for melting the liner stock, at least one annular extrusion opening located opposite to the container closure at said liner stock feeding position and a shutoff member for bringing said extrusion opening to a closed or open condition; and a molding tool engageable with the annular liner stock in the container closure, said molding tool having a circulating space through which a cooling medium is to be circulated.

This apparatus according to the invention is characterized in that it further comprises a separate molding machine for molding the annular liner stock in the container closure into the desired shape while it is still molten, in that the container closure is conveyed to a liner stock molding section from a liner stock feeding section by said closure conveying means after the annular liner stock is positioned in the container closure, and in that said closure conveying means is so constructed that it conveys the container closure to a section for heating the container closure before it conveys the container closure to said liner stock feeding section.

Another apparatus for forming a liner in a container closure, comprising a container closure conveying means for conveying container closures to be lined through a predetermined passage; an extruder for extruding a liner stock in the heated and molten state into an annular shape including a heating means for melting the liner stock and an annular extrusion opening; and a molding tool engageable with the annular liner stock in the container closure, said molding tool having a circulating space through which a cooling medium is to be circulated.

This apparatus according to the invention is characterized in that it further comprises a liner stock conveying means for cutting off at the extrusion opening the annular liner stock extruded from the extrusion opening of said extruder, conveying the cut liner stock to a container closure conveyed to a liner stock feeding section by said closure conveying means, and positioning it at a predetermined location in the container closure, and a molding machine for molding the annular liner stock in the container closure into the desired shape while it is still molten, in that the container closure is conveyed to a liner stock molding section from the liner stock feeding section by said closure conveying means after the annular liner stock is positioned in the container closure, and in that said closure conveying means is so constructed that it conveys the container closure to a section for heating the container closure before it conveys the container closure to said liner stock feeding section.

Brief Description of the Drawings

Figure 1 is a perspective view showing one embodiment of an apparatus in accordance with this invention;

Figures 2-a and 2-b are diagrammatic view for illustrating the outline of the operation of the apparatus shown in Figure 1;

Figure 3 is a sectional view showing an extruder used in the apparatus shown in Figure 1;

Figure 4 is an enlarged sectional view showing the details of the extrusion opening, and its neighborhood, of the extruder shown in Figure 3;

Figure 5 is a sectional view showing a part of a molding machine used in the apparatus shown in Figure 1;

Figure 6 is a perspective view showing some of the component parts of the molding machine shown in Figure 5;

Figure 7 is a perspective view showing an extruder and a liner stock conveying means which can be used instead of the extruder shown in Figures 3 and 4; and

Figures 8-a, 8-b and 8-c are simplified views showing the operation of the liner stock conveying means shown in Figure 7.

Detailed Description of Preferred Embodiments

The invention is described in greater detail below with reference to the accompanying drawings showing preferred embodiments of the apparatus of this invention.

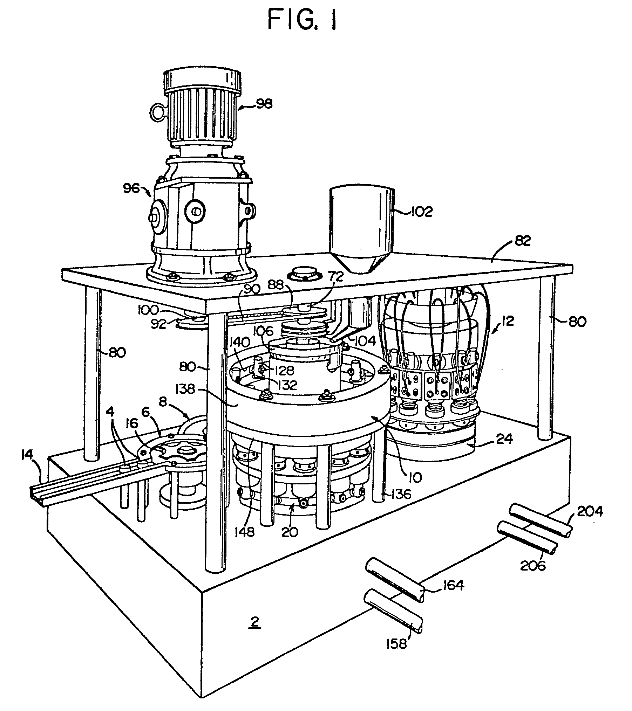

Referring to Figure 1, the apparatus of this invention illustrated includes container closure conveying means 6 for conveying container closures 4 to be lined, a heating section 8 for heating the container closures 4, an extruder 10, and a molding machine 12 as principal constituent elements mounted on a base stand 2.

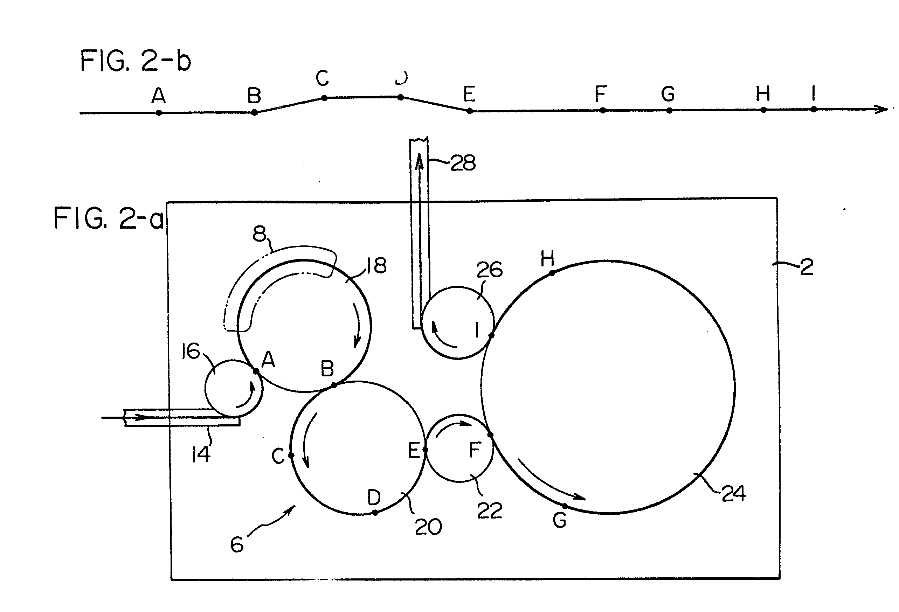

The closure conveying means 6, as will be described below with reference to Figures 2-a and 2-b, conveys closures 4 continuously through a predetermined path leading from the heating section 8 to the molding machine 12 via the extruder 10. The heating section 8 heats the closures 4 to a temperature suitable for the adhesion of the molten liner stock to a predetermined position of the closures 4, for example about 200°C. The extruder 10 functions to heat a liner stock composed of a suitable thermoplastic resin such as polyolefins or vinyl chloride resins, extrude the resulting molten liner stock into an annular shape, and position the extrudate at a predetermined locality in the closure 4 heated to the suitable temperature by the heating section 8. The molding machine 12 acts on the molten liner positioned in the closure 4 and molds it into the desired shape.

With reference to Figures 2-a and 2-b together with Figure 1, the outline of the operation of the apparatus shown in Figure 1 is described below.

A container closure 4 to be lined, in an upside-down condition, i.e. in a condition in which the inside of its top surface faces upward as shown in Figure 1, is fed to an inlet turret 16 rotating in the direction shown by an arrow in Figure 2-a through a feed conveyor 14. Then, at a position shown by symbol A in Figure 2-a, it is transferred from the inlet turret 16 to a turret 18 in the heating section. The turret 18 rotates in the direction shown by an arrow in Figure 2-a, and conveys the closure 4 from the position A to a position shown by symbol B in Figure 2-a along an arcuate path through the heating section 8. The heating section 8 includes a heater (not shown) of a known type such as a high frequency induction heater so that the closure 4 passing through the heating section is heated, for example, to about 200°C. The closure 4 which has been conveyed to the position B by the turret 18 in the heating section is then transferred to a turret 20 in the liner stock feeding section which is rotating in the direction shown by an arrow in Figure 2-a, and is conveyed from the position B to a position shown by symbol E through positions shown by symbols C and D in Figure 2-a along an arcuate path. The extruder 10 is disposed above the turret 20. As is understood from Figure 2-b, the closure 4 conveyed by the turret 20 is gradually lifted in a perpendicular direction in a region ranging from the position B to the position C, and in the liner stock feeding section between the position C and the position D, the molten liner stock extruded in an annular form from the extruder 10 is positioned in a predetermined location in the closure 4 and is adhered there, as will be described in detail hereinbelow. In a region from the position D to the position E, the closure 4 is gradually caused to descend in the perpendicular direction, as will be appreciated from Figure 2-b. The closure 4 which has been conveyed to the position E by the turret 20 is then transferred to a transfer turret 22 rotating in the direction shown by an arrow in Figure 2-a, and conveyed from the position E to a position shown by symbol F in Figure 2-a. The closure 4 is then transferred to a turret 24 in the molding section at the position F. The turret 24 rotating in the direction shown by an arrow in Figure 2-a conveys the closure 4 from the position F to a position shown by symbol I through positions shown by symbols G and H in Figure 2-a along an arcuate path. Above the turret 24 is disposed the molding machine 12. In the liner stock molding section between the positions G and H, the liner stock adhering to the closure 4 is molded into the desired shape. The closure 4 which has been conveyed to the position I by the turret 24 is then transferred to an outlet turret 26 rotating in the direction shown by an arrow in Figure 2-a, and from there, is discharged through a discharge conveyor 28.

In the apparatus shown in Figure 1, the various turrets 16, 18, 20, 22, 24 and 26 may be of any known types obvious to those skilled in the art, and therefore, a detailed description of these turrets is omitted in this specification. While in the apparatus shown in Figure 1, the closure conveying means 6 is constructed of a plurality of turrets, it is apparent to those skilled in that art that if desired, the closure conveying means may be constructed of other suitable means such as a chain conveyor.

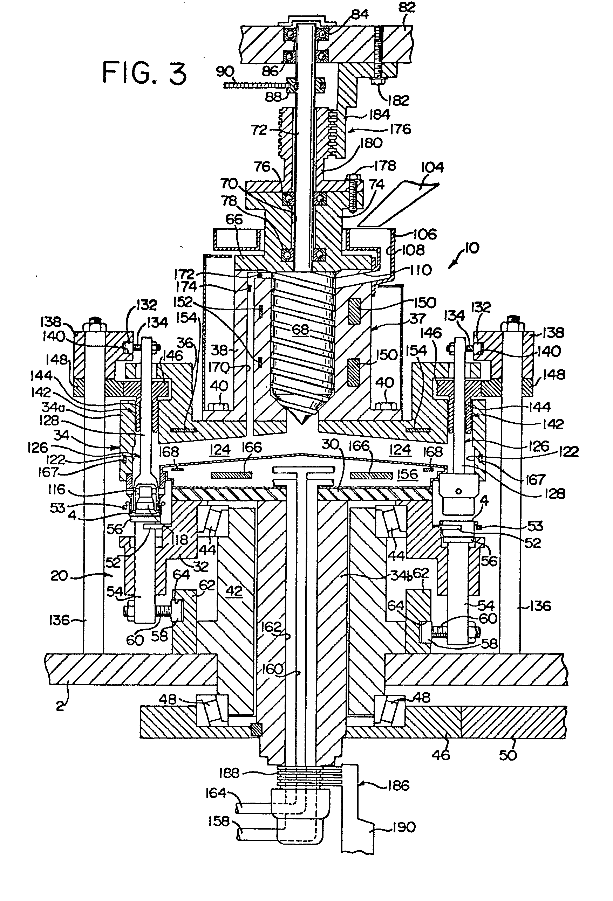

Now, the extruder 10 is described in greater detail with reference to Figures 1, 3 and 4, especially Figure 3.

The extruder 10 in the illustrated embodiment includes a main body 34 which, through a heat insulating section 30 containing a suitable heat insulating material, is formed integral with a generally annular main body portion 32 of the turret 20 of the closure conveying means 6. The main body 34 of the extruder 10 has a generally hollow cylindrical first portion 34a located above the turret 20 and a second portion 34b extending downwardly in the perpendicular direction through the center of the main body portion 32 of the turret 20. A circular depressed portion 36 is formed in the top surface of the first portion 34a, and to the bottom surface of the circular depression 36 is rigidly secured through a suitable clamping means such as a clamping bolt 40 a barrel member 38 defining a heat-melting section 37 of the extruder 10, specifically a substantially hollow cylindrical barrel member 38 defining therein a space for heat-melting the liner stock.

The main body 34 (the first portion 34a and the second portion 34b) of the extruder 10, the barrel member 38 and the turret 20 formed integral with the main body 34 of the extruder 10, as described hereinabove, are rotatably mounted on a cylindrical support section 42 connected integral to the base stand 2. Specifically, an upper annular bearing 44 is disposed between the top end port of the support 42 and the inside surface of the main body portion 32 of the turret 20, and a lower annular bearing 48 is provided between the lower end portion of the support 42 and the annular inside surface of a gear 46 secured to the lower end of the second portion 34b of the main body 34 of the extruder 10. By the provision of these bearings 44 and 48, the main body 34 of the extruder 10, the barrel member 38, and the turret 20 are mounted rotatably on the support section 42. The gear 46 secured to the lower end of the second portion 34b of the main body 34 is in mesh with an input gear 50 mounted rotatably on the base stand 2. The input gear 50 mounted rotatably on the base stand 2. The input gear 50 is connected to a suitable drive source (not shown) such as an electric motor mounted on the base stand 2 through a suitable transmission system (not shown). Hence, power transmitted from the drive source to the gear 46 through the input gear 50 causes the main body 34, the barrel member 38 and the turret 20 to rotate integrally in a predetermined direction at a suitable speed.

The construction of the turret 20 at the liner stock feeding section includes a turret plate 52 fixed to the aforesaid main body portion 32 and an outside guide rail 53. The turret plate 52 may be of a known type which has a plurality of nearly semicircular closure receivers spaced at equal intervals along its peripheral edge. The outside guide rail 53 may be of a known type which makes contact with the outside surface of the closure 4 and guide it so that the closure 4 transferred to a closure-receiver of the turret plate 52 at the position B in Figure 2-a is turned to the position E in Figure 2-b together with the turret plate 52. The turret plate 52 further includes a plurality of sliding levers 54 mounted on the main body portion 32 at positions corresponding to a plurality of the closure receivers formed along the peripheral edge of the turret plate 52. The sliding levers 54 are adapted to slide perpendicularly. To the top of each sliding lever 54 is secured a supporting disc 56 supporting the bottom of the closure 4 positioned within a closure receiver of the turret plate 52. A roller supporting lever 60 having a follower roller 58 rotatably mounted on its inside end is fixed to the vicinity of the bottom of the sliding lever 54. The follower roller 58 is engaged with an annular cam groove 64 formed on the outside surface of a cylindrical cam plate 62 secured to the base stand 2 and the cylindrical support section 42. The annular cam groove 64 has a configuration corresponding to that part of the track shown in Figure 2-b which is between B and E, and causes the sliding lever 54 to ascend or descend in the perpendicular direction during the rotation of the turret 20, whereby the closure 4 placed on the supporting disc 56 is caused to descend and ascend along the track shown by symbols B to E in Figure 2-b. In Figure 3, the sliding lever 54 on the right side is shown in its most descended condition (i.e., the condition at the positions shown by B and E in Figures 2-a and 2-b), and the sliding lever 54 on the left side is shown by its most lifted condition (i.e., the condition between the positions C and D in Figures 2-a and 2-b).

Turning again to the construction of the extruder 10, a closing member 66 for closing the upper end of the liner stock melting space defined within the barrel member 38 is fixed to the upper end of the barrel member 38 by a suitable means (not shown) such as a bolt. An extruder screw 68 is mounted within the liner stock melting space. The extruder screw 68 has a shaft 72 extending upwardly in the perpendicular direction through a through-hole 70 formed centrally in the closing member 66. The shaft 72 is rotatably supported by a pair of bearings 76 and 78 disposed within a bearing portion 74 formed integrally with the closing member 66 and projecting upwardly therefrom, and a pair of bearings 84 and 86 disposed within an upper supporting stand 82 fixed to a suitable position above the base stand 2 by means of supporting posts 80 (see Figure 1) extending upwardly from the four corners of the base stand 2. It will be appreciated therefore that the extruder screw 68 and the shaft 72 thereof are mounted so that they can rotate independently of the barrel member 38 of the extruder 10. To the vicinity of the top end of the shaft 72 is secured a pulley 88 which is drivingly connected to an input pulley 92 (see Figure 1) by a belt 90. On the other hand, as shown in Figure 1, a suitable power transmission mechanism 96 such as a gear box and a suitable drive source 98 such as an electric motor whose rotating output shaft is connected to the input shaft of the power transmission mechanism 96 are disposed on the upper supporting stand 82. The input pulley 92 is secured to an output shaft 100 of the power transmission mechanism 96. Accordingly, the rotating power is transmitted from the drive source 98 to the shaft 72 of the extruder screw 68 through the input pulley 92, the belt 90 and the pulley 88, whereby the shaft 72 and the extruder screw 68 are rotated at a suitable speed in a predetermined direction. The rotating direction of the main body 34 and the barrel member 38 of the extruder 10 may be the same as that of the extruder screw 68, but preferably, these rotating directions are opposite to each other. If these rotating directions are opposite to each other, the relative rotating speed of the extruder screw 68 to the barrel member 38 is increased by an amount corresponding to the rotating speed of the barrel member 38, and therefore, the rotation of the barrel member 38 can be additionally utilized in the heat-melting of the liner stock by the extruder screw 68.

The upper supporting stand 82 further has a hopper 102 (see Figure 1) secured thereto for including pelletized liner stock which may be made of a suitable thermoplastic resin such as a polyolefin or vinyl chloride polymer. Above the barrel member 38 of the extruder 10 is disposed a receptacle 106 for receiving the pellets discharged from a discharge opening 104 of the hopper 102. A discharge passage 108 of this receptacle 106 communicates with the liner stock melting space defined within the barrel member 38 through a passage 110 formed in the barrel member 38. It will be appreciated therefore that the pellets stored in the hopper 102 are fed into the liner stock melting space through receptacle 106 and the passage 110, and there, by the action of the rotating extruder screw 68, heat-melted and sent downwardly.

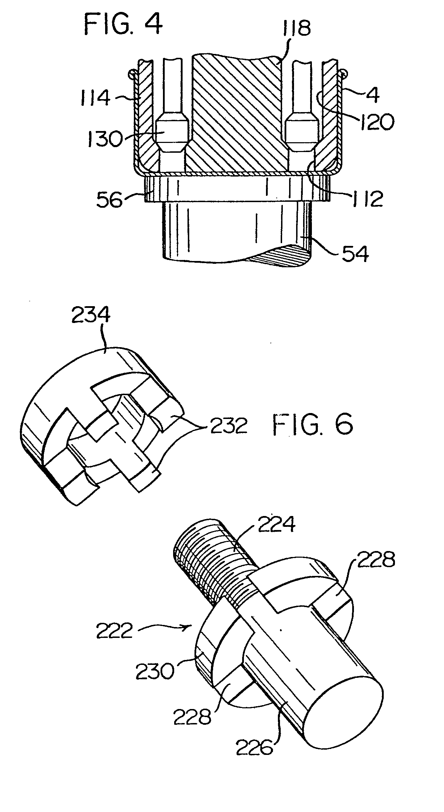

The main body 34 of the extruder 10 has disposed therein a plurality of extrusion openings 112 aligned at positions corresponding to the closure receivers formed along the peripheral edge of the turret plate 52 of the turret 20, i.e. at positions matching the closure receivers in the perpendicular direction. It is important that such an extrusion opening 112 should have an annular shape with a size corresponding to the size of a closure 4 to be lined. Referring to Figure 4 which is an enlarged sectional view of the extrusion opening 112 and its neighborhood together with Figure 3, each of the annular extrusion openings 112 is defined by the lower end of an outside cylindrical member 114 fixed by a suitable means to the lower surface of the outside portion of the first portion 34a of the main body 34 of the extruder 10 and the lower end of a substantially circular-cylindrical member 118 disposed concentrically within the member 114 by a suitable means such as a bolt 116. The outside diameter of the lower part of the member 114, as is clearly illustrated in Figure 4, is preferably substantially equal to, or slightly smaller than, the inside diameter of the closure 4 to be lined. Each of the annular extrusion openings 112 communicates with each of passages 122 through an annular extrusion passage 120 formed between the members 114 and 118. The passages 122 are disposed in a circumferentially spaced-apart relationship in the first portion 34a of the main body 34 of the extruder 10 and extend in the perpendicular direction. The perpendicular passage 122 communicates with a plurality of radial passages 124 extending radially from the lower end of the liner stock melting space having the extruder screw 68 disposed therein. It will be readily appreciated therefore that by the action of the rotating extruder screw 68, the heat-melted liner stock discharged from the liner stock melting space reaches the extrusion openings 112 through the radial passages 124, the perpendicular passage 122 and the annular extrusion passage 120, and is extruded from the extrusion openings 112.

The extruder 10 is further provided with shutoff members 126 for selectively bringing the individual extrusion openings 112 to a closed or opened condition. In the specified embodiment shown in the drawings, the shutoff member 126 is constructed of a valve rod member 128 disposed slidably in the perpendicular direction within the perpendicular passage 122 formed in the first portion 34a of the main body 34 of the extruder 10. The lower end of the valve rod member 128 has an annular valve 130, fixed thereto or formed integrally therewith, capable of sliding in the perpendicular direction in the annular passage 120. The valve 130 in its most descended position, i.e., the closed position, comes into engagement with the inside end of the extrusion opening 112 and closes the extrusion opening 112 from inside, and when it rises from the closed position and reaches an open position, departs from the inside end of the extrusion opening 112 and returns the extrusion opening 112 to the normally open state. The upper end of the valve rod member 128 projects beyond the first portion 34a of the main body 34 of the extruder 10, and to the neighborhood of its upper end is secured a roller supporting lever 134 to the outside end of which is rotatably secured a follower roller 132. On the other hand, a plurality of erect support posts 136 (see Figure 1) are fixed to the base stand 2 at spaced intervals in the circumferential direction, and an annular cam plate 138 is mounted on the upper end portion of each of these erect support posts 136. An annular cam groove 140 is formed in the inside surface of the annular cam plate 138 with which the follower roller 132 is engaged. The annular cam groove 140 causes the valve rod member 128 and the valve 130 provided at its lower end to ascend or descend in the preperpendicular direction when the main body 34 and the barrel member 38 of the extruder 10 are rotated together with the turret 20, thereby bringing the extrusion opening 112 to the open or closed state. More specifically, the main body 34 and the barrel member 38 of the extruder 10 are rotated together with the turret 20 to bring the extrusion opening 112 and the closure 4 located there beneath to the position C in Figure 2-a and 2-b (at which position the closure 4 is lifted by the action of the sliding lever 54, and assumes the state shown on the left side of Figure 3). Simultaneously with, or a little after, this time, the annular cam groove 140 and the follower roller 132 cooperate to lift the valve rod member 128 and the valve 130 provided at its lower end, thereby releasing the extrusion opening 112 from the closed state. As soon as, or a little before, the extrusion opening 112 and the closure 4 located beneath it reach the positions D shown in Figures 2-a and 2-b, the annular cam groove 140 and the follower roller 132 cooperate to cause the valve rod member 128 and the valve 130 provided at its lower end to descend, thereby closing the extrusion opening 112. It will be readily appreciated therefore that when the closure 4 is conveyed from the position C shown in Figures 2-a and 2-b to the position D by the action of the turret 20, the heat-melted liner stock is extruded in an annular shape from the extrusion opening 112, and the annular liner stock is positioned in and adhered to a predetermined location within the closure 4.

The illustrated embodiment further includes a so-called mechanical seal means 142 for sealing the upper end portion of the perpendicular passage 122 and thereby preventing the leakage of the molten liner stock from the upper end portion of the perpendicular passage 122. The mechanical seal means 142 is constructed of a seal member 144 rotatably mounted around the valve rod member 128 in the upper end portion of the perpendicular passage 122. The seal member 144 has a mechanical sealing screw thread formed on its inside surface for engagement with the surface of the valve rod member 128, and a second mechanical sealing screw thread formed on its outside surface for engagement with the inside surface of the perpendicular passage 122. A gear 146 is formed integrally with, or rigidly secured to, the upper end portion of the seal member 144. On the other hand, immediately below the annular cam plate 138, an annular gear 148 having teeth formed on its inside surface is secured to the erect support post 136 for engagement with the gear 146 provided in the seal member 144. It will be appreciated that in the structure described hereinabove, when the main body 34 of the extruder 10 rotates, the seal member 144 rotates about the central axial line of rotation of the main body 34 and also revolves about its own central axial line because of the gear 146 of the seal member 144 is in engagement with the fixed annular gear 148, and that by this revolution about its own axial line, the top end portion of the perpendicular passage 122 can be effectively sealed mechanically.

The extruder 10 in the illustrated embodiment further includes various means known *per se* for controlling the temperature and pressure of the liner stock to be heat-melted in the liner stock melting space defined within the barrel member 38 and the molten liner stock passing through the radial passages 124. These means are briefly described below with reference to Figure 3. An electric heater 150 is provided in the barrel member 38. The barrel member 38 also includes a temperature detector 152 for detecting the temperatures of the barrel members 38 at various positions in order to properly control power supply to the electric heater 150. An electric heater 154 is provided above the radial passages 124 of the first portion 34a of the main body 34 of the extruder 10. On the other hand, a heat transfer medium circulating chamber 156 is provided below the radial passages 124 of the first portion 34a of the main body 34 of the extruder 10. A suitable heat transfer medium such as water or air is to be circulated in the circulating chamber 156. The heat transfer medium is introduced from the suitable supply source (not shown) into the circulating chamber 156 through a supply conduit 158 and a flow passage 160 provided within the second portion 34b of the main body 34, and is discharged through a flowout passage 162 and a discharge conduit 164 disposed within the second portion 34b of the main body 34. The circulating chamber 156 includes an electric heater 166. An electric heater 167 is provided at that position of the first portion 34a of the main body 34 which adjoins the perpendicular passage 122. The circulating chamber 156 also includes a temperature detector 168 for detecting the temperature in the circulating chamber 156 in order to control power supply to the electric heater 166, 167 and 154. The first portion 34a of the main body 34 of the extruder 10 and the barrel member 38 have provided therein a relief passage 170 which extends upwardly in the perpendicular direction from the radial passages 124 and further extends radially inwardly to cause the radial passages 124 to communicate with the neighborhood of the upper end portion of the liner melting space. The relief passage 170 includes a relief valve 172 provided for example at the radially extending part, and pressure detector 174 in the perpendicularly extending part for detecting the pressure of the heat-melted liner stock. When the pressure of the heat-melted liner stock in the radial passages 124 exceeds a certain limit, the pressure detector 174 detects it and opens the relief valve 172, thereby returning the heat-melted liner stock in the radial passages 124 to the upper end portion of the liner melting space through the relief passage 170. When the pressure of the molten liner stock in the radial passages 124 is below the upper limit specified, the relief valve 172 is closed to shut off the relief passage 170. The aforesaid electric heaters 150, 154, 166 and 167 and a solenoid (not shown) attached to the relief valve 172 to close the relief valve 172 are connected to a suitable power supply source (not shown) through a suitable wiring means (not shown) provided in the extruder 10 and a slip ring mechanism 176 provided at the upper portion of the extruder 10. The slip ring mechanism 176 is made up of a generally substantially cylindrical member 180 fixed by suitable means such as a bolt 178 to the upper end of bearing means 74 of the closing member 66 secured to the upper end of the barrel member 38, and member 184 fixed to the undersurface of the support stand 82 by a suitable means such as a bolt 182 and cooperating with the member 180. On the other hand, the temperature detectors 152 and 168 and the pressure detector 174 are connected through a suitable wiring means (not shown) disposed within the extruder 10 and a slip ring 186 provided at the lower end of the extruder 10 to a suitable control circuit (not shown) for controlling the supply of power to the aforesaid electric heaters 150, 154 and 166 and solenoid. The slip ring mechanism 186 is constructed of a generally substantially cylindrical member 188 fixed to the lower end portion of the second portion 34b of the main body 34 of the extruder 10 and a member 190 fixed to a part of the base stand 2 and cooperating with the member 188.

Now, the molding machine 12 is described below in detail with reference to Figures 1, 5 and 6.

The molding machine 12 may be of any suitable type which can mold the liner stock positioned at a predetermined locality within the closure 4 by the extruder 10 into the desired shape while it is still in the heat melted state. The basic constituent elements of the molding machine 12 may be substantially the same as those of known molding machines. The molding machine shown in Figures 1, 5 and 6 is conveniently used in this invention.

In the illustrated embodiment, the molding machine 12 is mounted above the turret 24 of the molding section of the closure conveying means to that it can rotate together with the turret 24, as in the case of the relation between the extruder 10 and the turret 20 of the closure conveying means 6, although no detail of the mounting mechanism is shown in the drawing.

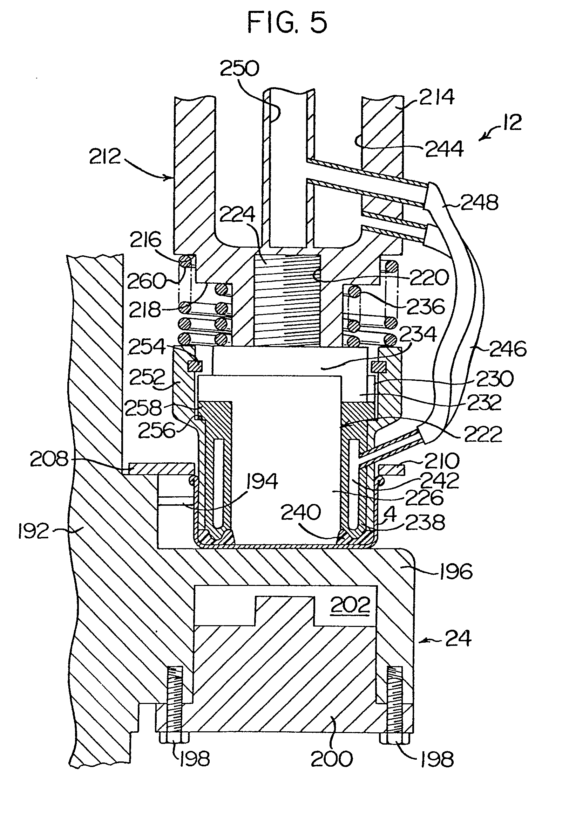

The turret 24 of the closure conveying means 6 in the molding section is rotatably mounted on the base stand 2 as in the case of the main body portion 32 of the turret 20 in the stock feeding section, and includes a main body portion 192 (only a part of its peripheral edge is shown in Figure 5) adapted to be driven at a suitable speed in a predetermined direction by a suitable drive source (not shown) such as an electric motor through a suitable power transmission mechanism (not shown). To the main body portion 192 is secured a turret plate 194, similar to the turret plate 52 in the turret 20, which is a known annular turret plate having a plurality of substantially semicircular closure receivers spaced at equal intervals along the peripheral edge. On the other hand, as shown in Figure 5, the main body 192 has integrally formed therein an annular projection 196 extending substantially horizontally beneath the turret plate 194 and further extending downwardly in the perpendicular direction. To the bottom of such an annular projection 196 is fixed an annular member 200 by a suitable means such as bolts 198, and a circulating space 202 through which a cooling medium, preferably water, is circulated is defined between the undersurface of the annular projection 196 and the annular member 200. The cooling medium is fed from a supply conduit 204 (see Figure 1) to the circulating space 202 through a flow-in passage (not shown) disposed within the main body 192, and is discharged from a flow-out passage (not shown) disposed within the main body 192 through a discharge conduit 206 (see Figure 1). Furthermore, an annular inside stripper member 208 and an annular outside stripper member 210 are secured to the main body portion 192 at a position above the top surface of the horizontal portion of the annular projection 196 spaced a predetermined distance (slightly larger than the height of the closure). As will be described specifically hereinbelow, these stripper members 208 and 210 come into engagement with the upper end of the closure 4 to prevent the closure 4 from rising together with a molding device (to be described hereinbelow) of the molding machine 12 when the molding device is caused to descend in the perpendicular direction and molds the liner stock in the closure 4 placed in a closure receiver of the turret plate and supported on the horizontal portion of the annular projection 196.

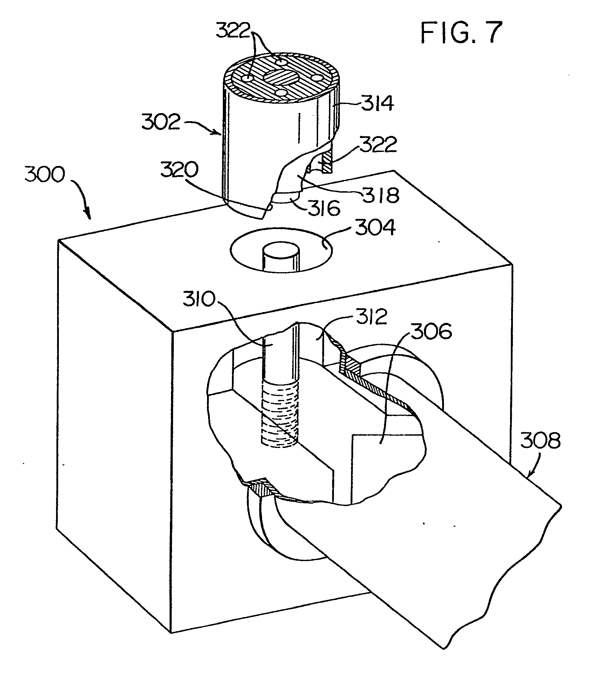

The molding machine 12 cooperating with the turret 24 in the molding section as described above has a plurality of molding devices 212 (Figure 5 shows a part of one of such tools) provided above the closure receivers of the turret plate 194 corresponding to these receivers. Referring to Figure 5, each of the molding tools devices has a sliding member 214 which is mounted slidably in the perpendicular direction on the main body portion 192 of the turret 24 or on a suitable member secured to the main body portion 192. The sliding member 214 has provided at its lower portion two annular shoulder portions 216 and 218 facing downward in the perpendicular direction and a central screw hole 220. The upper end portion of a central member 222 is screwed with the central screw hole 220 of the sliding member 214. As shown in Figure 6, the central member 222 includes an upper portion 224 having its outside surface threaded for screwing with the central screw hole 220, a circular-cylindrical lower portion 226 having a predetermined outside diameter, and a flange 230 having a plurality of recesses 228 positioned between the upper portion 224 and the lower portion 226 and spaced from each other in the circumferential direction. Furthermore, as shown in Figure 6, around the lower end portion of the sliding member 214 is slidably fitted idly an annular member 234 having a plurality of projections 232 projecting downwardly in the perpendicular direction. The projections 232 of the annular member 234 are positioned so that they respectively match a plurality of recesses 228 formed at the flange portion 230 of the central member 222. Between the shoulder portion 218 of the sliding member 214 and the upper end surface of the annular member 234 is disposed a spring 236 which elastically urges the annular member 234 downwardly in the perpendicular direction. By the urging action of the spring 236, the annular member 234 is urged against the top surface of the flange portion 230 of the central member 222, and the individual projections 232 project downwardly beyond the undersurface of the flange portion 230 through the recesses 228. Around the circular cylindrical lower portion 226 of the central member 222 is fitted a molding tool 238 in a manner such that it can freely slide with respect to the lower portion 226. The projection 232 of the annular member 234, which projects downwardly through the recess 228 formed in the flange portion 230 of the central member 222, abuts the top end surface of the molding tool 238. Accordingly, the urging force of the spring 236 is exerted on the molding tool 238 through the annular member 234, and the molding tool 238 is urged elastically downwardly in the perpendicular direction. The lower end surface of the molding tool 238 to be engaged with the heat-melted liner stock 240 positioned at a predetermined locality in the closure 4 by the extruder 10 as described hereinabove is shaped corresponding to the desired shape of the liner to be finally formed in the closure 4. Preferably, the molding tool 238 has formed therein an annular circulating space 242 through which a cooling medium, preferably water, is to be circulated. The cooling medium is introduced from a suitable supply conduit (for example, it may be the supply conduit 204 shown in Figure 1) into the circulating space 242 through a flow-in passage 244 formed in the sliding member 214 and a flow-in conduit 246 communicating with the flow-in passage 244, and is discharged from a suitable discharge conduit (for example, it may be the discharge conduit 206 shown in Figure 1) through a flow-out conduit 248 and a flow-out passage 250 formed in the sliding member 214. A generally substantially cylindrical sleeve 252 is slidably fitted exteriorly of the molding tool 238 and the flange portion 230 of the central member 222. It is essential that the outside diameter of the lower portion of the sleeve 252 should be substantially equal to, or slightly smaller than, the inside diameter of the closure 4. To the inside surface of the sleeve 252 in the vicinity of its upper end is secured a stop ring 254 which abuts the upper surface of the flange portion 230 of the central member 222 to restrict the downward movement of the sleeve 252 with respect to the central member 222. An annular shoulder portion 256 is formed on the inside of the sleeve 252 at its middle portion. The shoulder portion 256 comes into engagement with the undersurface of the annular flange 258 formed at the upper end portion of the molding tool 238 to restrict the downward movement of the molding tool 238 with respect to the sleeve 252. Between the upper end surface of the sleeve 252 and the shoulder portion 216 of the sliding member 214 is disposed a spring 260 which elastically urges the sleeve 252 downwardly in the perpendicular direction so that the stop ring 254 fixed to the sleeve 252 abuts the top surface of the flange portion 230 of the central member 222.

Although not shown in the drawings, the molding device 212 further includes a suitable lift mechanism which moves the sliding member 214 of the molding device 212, the central member 222, annular member 234 and molding tool 238 mounted on the molding device 212, and the sleeve 252 upwardly and downwardly in the perpendicular direction as prescribed, when the turret 24 in the molding section rotates and the molding device 212 is rotated about the central axial line of the turret 24. The lift mechanism may be a mechanism similar to a mechanism composed of the annular cam groove 140 and cooperating follower roller 132 for moving the shutoff device 126 of the extruder 10 upwardly and downwardly, and therefore, it may be a mechanism constructed of an annular cam groove fixed to the base stand 2 and a follower roller mounted on the upper end portion of the sliding member 214 and cooperating with the annular cam groove upon engagement therewith. Such a lift mechanism gradually causes the molding device 212 to descend to the descended position shown in Figure 5 from the lifted position at which the lower end of the lower portion 226 of the central member 222, the lower end of the molding tool 238 and the lower end of the sleeve 252 are somewhat above the stripper members 208 and 210 of the turret 24 in the molding section, while the molding device 212, incident to the rotation of the turret 24, moves from the position F in Figure 2-a to the position G in Figure 2-a. While the molding device 212 moves from the position G to the position H shown in Figure 2-a, the lift mechanism holds the molding device 212 in the aforesaid descended position. Then, while the molding device 212 moves from the position H to the position I shown in Figure 2-a, the left mechanism gradually lifts the molding device 212 from the aforesaid descended position to the lifted position. Thus, the lift mechanism holds the molding device 212 at the lifted position while the molding device 212 moves from the position I to the position F shown in Figure 2-a.

When the molding device 212 has been caused to descend to the descended position, the lower portion 226 of the central member 222, the molding tool 238 and the sleeve 252 are placed in the closure 4 as shown in Figure 5. The lower end surface of the lower portion 226 of the central member 222 comes into engagement with the central part of the central panel portion of the closure 4, and the lower end surface of the molding tool 238 and the lower end surface of the sleeve 252 are urged by the action of the springs 236 and 260 and come into engagement with the annular liner stock 240, thus molding it into the desired shape. It will be appreciated therefore that while the closure 4 having the annular liner stock 240 positioned at a predetermined locality thereof by the action of the extruder 10 is conveyed by the turret 24 in the molding section from the position F to the position H shown in Figure 2-a, the heat-melted liner stock is molded as required by the action of the molding device 212 of the molding machine 12, and during this molding, the molded liner is cooled by the cooling media circulating through the circulating space 202 of the turret 24 and the circulating space 242 of the molding tool 238.

The shapes of the lower end surface of the molding tool 238 and the lower end surface of the sleeve 252, therefore the shape of the liner to be formed, may be any desired one corresponding to the opening end (not shown) of a container such as a bottle or can to which the closure 4 is to be applied. In the illustrated embodiment, the entire undersurface of the circular-cylindrical lower portion 226 of the central member 222 comes into engagement with the central part of the central panel portion of the closure and therefore, the liner stock does not flow at all to the central part of the central panel portion. If desired, however, some of the liner stock may be permitted to flow to the central part of the central panel portion of the closure at the time of molding.

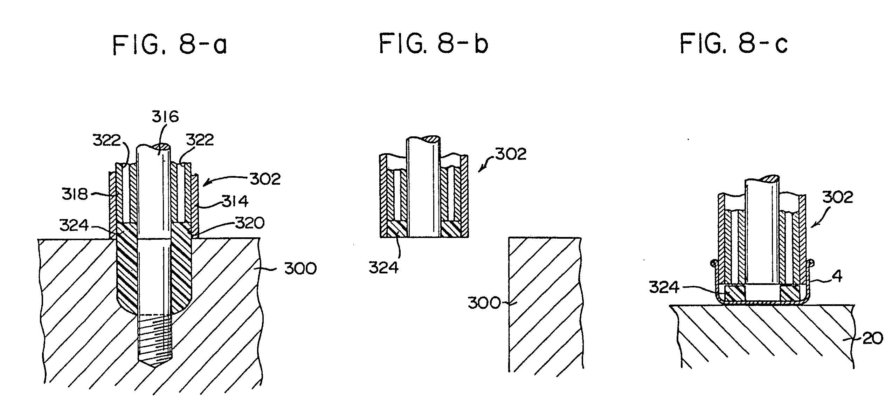

Figures 7 and 8-a and 8-c show an extruder 300 for extruding a molten liner stock in annular form and a liner stock conveying means 302 for conveying the liner stock extruded from the extruder 300 to a closure and positioning it at a predetermined locality in the closure, which can be used instead of the extruder 10 illustrated in Figures 3 and 4.

The extruder 10 illustrated in Figures 3 and 4, as described hereinabove, extrudes the molten liner stock into annular form, and positions it directly at a predetermined locality in the closure 4. In contrast, the extruder shown in Figure 7 only extrudes the molten liner stock into annular form, and the liner stock extruded from the extruder 300 is conveyed to the inside of the closure 4 by the liner stock conveying means 302 and positioned at a predetermined location.

Referring to Figure 7, the extruder 300 will first be described. The extruder 300 disposed for example, at the site spaced apart from the turret 20 in the stock feeding section of the closure conveying mechanism 6 of the apparatus shown in Figure 1 is of substantially the same structure as an ordinary extruder except that an extrusion opening 304 preferably directed upwardly in the perpendicular direction is of an annular shape. The extruder 300 includes therein an extruder screw 306 (only a part of its tip portion is shown in Figure 7), a heat-melting section 308 and an extrusion opening 304 for extruding the liner stock molten in the heat-melting section 308. The extrusion opening 304 is located at an exit end of an extrusion passage 312 having an annular cross section and defined by a hole having a circular cross section and a circular-cylindrical core 310 provide coaxially with, and centrally of, the hole, and has the same annular cross sectional shape as the extrusion passage 312.

The liner stock conveying means 302 will now be described. The liner stock conveying means 302 may be of any suitable types which can cut off the molten liner stock extruded from the extrusion opening 304 of the extruder 300 from the extrusion opening 304, convey it to the inside of the closure 4 (see Figure 8-c), and position it at a predetermined location in the closure 4. Preferably, however, it is of the structure shown in Figure 7. Referring to Figure 7 and Figure 8-a, the liner stock conveying means 302 includes a cylindrical outside member 314 disposed con-coaxially, a circular-cylindrical central member 316, and disposed between these an annular intermediate member 318 (Figure 7 and Figures 8-a to 8-c show only the lower end portion of these members), the three members being provided coaxially. These three members, as will be described in detail hereinbelow are moved intregrally by a suitable transfer means (not shown), and the intermediate member 318 is caused to ascend and descend in the perpendicular direction with respect to the outside member 314 and the central member 316 by a suitable actuating means (not shown). In a normal condition, the lower end of the outside member 314 and the lower end of the central member 316 are located on the same plane, but the lower end of the intermediate member 318 is retracted upwardly by a predetermined distance from said plane. Hence, at the lower end portions of the members 314, 316 and 318, there is formed an annular liner stock accommodation recess 320 whose side wall is defined by the inside surface of the outside member 314 and the outside surface of the central member 316 and whose bottom surface is defined by the lower end surface of the intermediate member 318. It is important that the liner stock accommodating recess 320 should have a shape corresponding to the extrusion opening 304 of the extruder 300. The intermediate member 318 has formed therein one or a plurality (four in the drawing) of through-holes 322 which communicate with a suitable vacuum supplying means (not shown) through a control valve (not shown).

Now, referring to Figures 8-a to 8-c, the operation of the liner stock conveying means 302 described above will be explained. After or before the liner stock is extruded from the extrusion opening 304 of the extruder 300, the state of the liner stock conveying means 302 is such that the liner stock accommodating recess 320 is caused to descend in the perpendicular direction while its position matches the extrusion opening 304 of the extruder 300, and is caused to abut the extrusion opening 304. Hence, the liner stock accommodating recess 320 is put over the annular liner stock 324 extruded from the extrusion opening 304. Then, vacuum is supplied to the liner stock accommodating recess 320 via the through-holes 322 from the vacuum supplying means (not shown). Simultaneously, as shown in Figure 8-b, the liner stock conveying means 302 is moved laterally of the extrusion opening 304. Thus, the liner stock 324 extruded from the extrusion opening 304 is cut off from the liner stock present in the extrusion passage 312 by the shearing action of the inside lower edge of the outside member 314 and the outside lower edge of the central member 316, and is moved together with the liner stock conveying means 302. At this time, by the action of the vacuum supplied to the recess 320, the cut-off liner stock 324 is held in the recess 320 without dropping. Then, the liner stock conveying means 302 having the liner stock 324 stored therein is moved to a position above the closure 4 which is being conveyed by the turret 20 in the stock feeding section of the closure conveying means 6, and is moved synchronously with the closure 4 along the moving path of the closure 4, and simultaneously caused to descend a predetermined distance in the perpendicular direction. Thus, the liner stock conveying means 302 is inserted in the closure 4 as shown in Figure 8-c, and the lower end of the outside member 314 and the lower end of the central member 316 are brought to a position above the central panel portion of the closure 4 through a distance substantially equal to, or slightly larger than, the depth of the recess 320, i.e. the thickness of the liner stock accommodated therein. Then, the supply of vacuum to the liner stock accommodating recess 320 is stopped and the recess 320 is caused to communicate with the outer atmosphere via the through-holes 322. Simultaneously, the intermediate member 318 is caused to descend with respect to the outside member 314 and the central member 316 so that its lower end is located on the same plane as the lower ends of the central member 316 and the outside member 314. As a result, the liner stock 324 stored in the recess 320 is discharged from it, and transferred to the inside of the closure 4, whereby the annular molten liner stock 324 is positioned at a predetermined location in the closure 4.

After the liner stock 324 has been positioned at a predetermined location in the closure 4, the intermediate member 318 is lifted to the original position, and the outside member 314, the central member 316 and the intermediate member 318 are lifted integrally, and further returned to a position above the extrusion opening 304 of the extruder 300. Then, the above operation is repeated.

On the other hand, the closure in which the molten liner stock has been positioned in a predetermined location is conveyed to the molding section by the closure conveying means 6, and the liner stock 324 is molded into the desired shape by the action of a suitable molding machine, such as molding machine 12 described hereinabove, while it is in the molten state.

### Claims

1. A method for forming a liner in a container closure (4), which comprises conveying a container closure (4) to a liner stock feeding position, extruding a liner stock (240 or 324) in the heated and molten state into an annular shape by an extruder (10 or 300), positioning the annular liner stock (240 or 324) at a predetermined location in the container closure (4), molding the annular liner stock positioned in the container closure (4) into the desired shape while it is still in the molten state, and cooling the annular liner stock (240 or 324) by circulating a cooling medium within a molding tool (212) while the annular liner stock (240 or 324) is being molded, characterized in that the container closure (4) is conveyed to a liner stock feeding section where the annular liner stock (240 or 324) is positioned in the container closure (4), the container closure (4) having the annular liner stock (240 or 324) therein is then conveyed from the liner stock feeding section to a liner stock molding section where the annular liner stock (240 or 324) is molded into the desired shape, and the container closure (4) is heated before the annular liner stock (240 or 324) is positioned therein.

2. The method of claim 1 characterized in that by extruding the molten liner stock (240) in annular form directly from the extruder (10) to the container closure (4), the annular liner stock (240) is positioned at the predetermined location in the container closure (4).

3. The method of claim 1 characterized in that by conveying the annular liner stock (324) extruded from the extruder (300) by a conveying means (302), the annular liner stock (324) is positioned at the predetermined location in the container closure (4).

4. An apparatus for forming a liner in a container closure (4), said apparatus comprising a container closure conveying means (6) for conveying container closures (4) to be lined through a predetermined passage; an extruder (10) for extruding a liner stock (240) in the heated and molten state in an annular shape into a container closure (4) conveyed to a liner stock feeding position by said conveying means (6) and for positioning the annular liner stock (240) in a predetermined location in the closure, said extruder (10) including heating means (68, 150, 154, 166, 167) for melting the liner stock, at least one annular extrusion opening (112) located opposite to the container closure (4) at said liner stock feeding position and a shutoff member (126) for bringing said extrusion opening (112) to a closed or open condition; and molding tool (238) engageable with the annular liner stock (240) in the container closure (4), said molding tool (238) having a circulating space (242) through which a cooling medium is to be circulated, characterized in that said apparatus further comprises a separate molding machine (12) for molding the annular liner stock (240) in the container closure (4) into the desired shape while it is still molten, in that the container closure (4) is conveyed to a liner stock molding section from a liner stock feeding section by said closure conveying means (6) after the annular liner stock (240) is positioned in the container closure (4), and in that said closure conveying means (6) is so constructed that it conveys the container closure (4) to a section (8) for heating the container closure (4) before it conveys the container closure (4) to said liner stock feeding section.

5. The apparatus of claim 4 characterized in that said shutoff member (126) of the extruder (10) has an annular openable and closable valve (130) at its forward end portion which is adapted to slide within an annular extrusion passage (120) disposed within the extruder (10) and extending to the extrusion opening (112) between its closed position at which it closes the extrusion opening (112) from its inside and its open position at which it retracts from the closed position and opens the extrusion opening (112).

6. The apparatus of claim 4 or 5 characterized in that said closure conveying means (6) is constructed such that it continuously conveys the container closures (4) along a substantially arcuate passage at the liner stock feeding section; in that the extruder (10) includes a plurality of extrusion openings (112) arranged annularly above the arcuate passage corresponding to said arcuate shape and a plurality of shutoff members (126) provided in relation to the respective extrusion openings (112); and in that said extrusion openings (112) and said shutoff members (126) of said extruder (10) are continuously turned synchronously with the movement of the container closure (4) being conveyed along the arcuate passage so that each of the extrusion openings (112) moves in coordination with each of the container closures (4) conveyed through said arcuate passage in the perpendicular direction.

7. The apparatus of claim 6 characterized in that said closure conveying means (6) and said extruder (10) are so constructed that when the container closure (4) enters the arcuate passage and matches with one of the extrusion openings (112) of said extruder (10) in the perpendicular direction, the container closure (4) is lifted in the perpendicular direction, and the inside surface of the container closure (4) is caused to contact or approach the lower end of said extrusion opening (112), and simultaneously the shutoff member (126) provided in relation to said extrusion opening (112) is moved to open said extrusion opening (112), whereby the annular liner stock (240) is extruded from said extrusion opening (112) and pushed against a predetermined position within the container closure (4), after which the shutoff member (126) is moved to close the extrusion opening (112) and the container closure (4) is caused to descend in the perpendicular direction.

8. An apparatus for forming a liner in a container closure (4), said apparatus comprising a container closure conveying means (6) for conveying container closures (4) to be lined through a predetermined passage; an extruder (300) for extruding a liner stock (324) in the heated and molten state into an annular shape including a heating means (306, 308) for melting the liner stock and an annular extrusion opening (304); and a molding tool (238) engageable with the annular liner stock (324) in the container closure (4), said molding tool (238) having a circulating space (242) through which a cooling medium is to be circulated, characterized in that said apparatus further comprises a liner stock conveying means (302) for cutting off at the extrusion opening (304) the annular liner stock (324) extruded from the extrusion opening (304) of said extruder, conveying the cut liner stock (324) to a container closure (4) conveyed to a liner stock feeding section by said closure conveying means (6), and positioning it at a predetermined location in the container closure (4), and a molding machine (12) for molding the annular liner stock (324) in the container closure (4) into the desired shape while it is still molten, in that the container closure (4) is conveyed to a liner stock molding section from the liner stock feeding section by said closure conveying means (6) after the annular liner stock (324) is positioned in the container closure (4), and in that said closure conveying means (6) is so constructed that it conveys the container closure (4) to a section (8) for heating the container closure (4) before it conveys the container closure (4) to said liner stock feeding section.

9. The apparatus of claim 8 characterized in that said extrusion opening (304) of said extruder (300) is directed upwardly in the perpendicular direction, the liner stock conveying means (302) has an annular liner stock accommodating recess (320) directed downwardly in the perpendicular direction, said recess (320) is caused to descend in the perpendicular direction and is put over the annular liner stock (324) extruded from the extrusion opening (304) of said extruder (300), the liner stock accommodating recess (320) is then moved horizontally of the extrusion opening (304), whereby the annular liner stock (324) extruded from the extrusion opening (304) is cut off from the extrusion opening (304) and held in the liner stock accommodating recess (320), after which the recess (320) is matched with the container closure (4) conveyed to said liner stock feeding section and the annular liner stock (324) held in the recess (320) is positioned in the predetermined location in the container closure (4).

10. The apparatus of claim 9 characterized in that said liner stock conveying means (302) includes a vacuum supply means (322) for supplying vacuum selectively to said liner stock accommodating recess (320) of said liner stock conveying means (302), the bottom surface of said recess (320) is defined by the lower end surface of a member (318) movable in the perpendicular direction independently from members (314, 316) defining the side walls of said recess (320), and when said recess (320) is put over the annular liner stock (324) extruded from the extrusion opening (304) of said extruder (300), vacuum is supplied to said recess (320) by said vacuum supplying means (322), and when said recess (320) is matched with the container closure (4), the supply of vacuum to said recess (320) by said vacuum supply means (322) is stopped, and simultaneously said member (318) whose lower end surface defines the bottom surface of said recess (320) is caused to descend in the perpendicular direction, whereby the annular liner stock (324) is transferred from said recess (320) to the inside of said container closure (4) and is pushed against a predetermined position of the inside of the container closure (4).

**Revendications**

1. Procédé de façonnage d'une garniture dans une fermeture de récipient (4) qui consiste à transporter une fermeture de récipient (4) jusqu'en une position d'alimentation de la charge de matière à garniture, à extruder une charge de matière à garniture (240 ou 324) à l'état chauffé et fondu sous une forme annulaire par une extrudeuse (10 ou 300), à positionner la charge de matière à garniture annulaire (240 ou 324) à un endroit prédéterminé dans la fermeture de récipient (4), à mouler la charge de matière à garniture annulaire mise en place dans la fermeture de récipient (4) sous la forme souhaitée pendant qu'elle est encore à l'état fondu, et à refroidir la charge de manière à garniture annulaire (240 ou 324) en faisant circuler un agent de refroidissement dans l'outil de moulage (212) pendant que la charge de matière à garniture annulaire (240 ou 324) est en cours de moulage, caractérisé en ce que la fermeture de récipient (4) est transportée à une section d'amenée de la charge de matière à garniture où la charge de matière à garniture annulaire (240 ou 324) est mise en place dans la fermeture de récipient (4), la fermeture de récipient (4) dans laquelle est placée la charge de matière à garniture annulaire (240 ou 324) est alors transportée de la section d'alimentation de la charge de matière à garniture à une section de moulage de la charge de matière à garniture où la charge de matière à garniture annulaire (240 ou 324) est moulée sous la forme souhaitée et en ce que la fermeture de récipient (4) est chauffée avant que la charge de matière à garniture annulaire (240 ou 324) soit mise en place dans celle-ci.

2. Procédé selon la revendication 1, caractérisé en ce que par l'extrusion de la charge de matière à garniture fondue (240) sous forme annulaire directement de l'extrudeuse (10) dans la fermeture de récipient (4), la charge de matière à garniture annulaire (240) est mise en place en un endroit prédéterminée dans la fermeture de récipient (4).

3. Procédé selon la revendication 1, caractérisé en ce que par transport de la charge de matière à garniture (324) extrudée de l'extrudeuse (300) par un moyen de transport (302), la charge de matière à garniture annulaire (240) est mise en place à l'endroit prédéterminé dans la fermeture de récipient (4).

4. Un dispositif pour le façonnage d'une garniture dans une fermeture de récipient (4), ce dispositif comportant un moyen de transport de fermetures de récipient (6) pour transporter les fermetures de récipient (4) à garnir suivant un trajet déterminé; une extrudeuse (10) pour extruder une charge de matière à garniture (240) à l'état chauffé et fondu sous une forme annulaire dans une fermeture de récipient (4) transportée à une position d'alimentation de la charge de matière à garniture par ledit moyen de transport (6) et pour mettre en place la charge de matière à garniture annulaire (240) en un endroit prédéterminé dans la fermeture, ladite extrudeuse (10) comportant des moyens de chauffage (69, 150, 154, 166, 167) pour fondre la charge de matière à garniture, au moins un orifice d'extrusion annulaire (112) situé en face de la fermeture de récipient (4) occupant ladite position d'alimentation de la charge de matière à garniture et un organe obturateur (126) pour fermer ou ouvrir ledit orifice d'extrusion (112); et un outil de moulage (238) pouvant agir sur la charge de matière à garniture annulaire (240) placée dans la fermeture de récipient (4), ledit outil de moulage (238) présentant un espace de circulation (242) à travers lequel on peut faire circuler un agent de refroidissement, caractérisé en ce qu'il comporte en outre une machine à mouler séparée (12) pour mouler la charge de matière à garniture annulaire (240) se trouvant dans la fermeture de récipient (4) à la forme souhaitée pendant qu'elle est encore fondue, en ce que la fermeture de récipient (4) est transportée à une section de moulage de la charge de matière à garniture à partir de la secion d'amenée de la charge de matière à garniture par ledit moyen de transport de fermetures (6) après que la charge de matière à garniture annulaire (240) ait été mise en place dans la fermeture de récipient (4), et en ce que ledit moyen de transport de fermetures (6) est réalisé de façon à transporter la fermeture de récipient (4) à une section (8) de chauffage de la fermeture de récipient (4) avant de transporter la fermeture de récipient (4) à ladite section d'alimentation de la charge de matière à garniture.

5. Dispositif selon la revendication 4, caractérisé en ce que ledit organe obturateur (126) de l'extrudeuse (10) présente à sa partie terminale avant une soupape annulaire susceptible d'être ouverte et fermée (130) agencée pour coulisser dans un passage d'extrusion annulaire (120) ménagé dans l'extrudeuse (10) et qui s'étend jusqu'à l'orifice d'extrusion (112), entre sa position de fermeture dans laquelle elle ferme, à partir de l'intérieur, l'orifice d'extrusion (112) et sa position d'ouverture dans laquelle elle recule à partir de la position de fermeture et ouvre l'orifice d'extrusion (112).

6. Dispositif selon la revendication 4 ou 5, caractérisé en ce que ledit moyen de transport de fermeture (6) est réalisé de manière à transporter en continu les fermetures de récipient (4) le long d'un trajet sensiblement en arc de cercle dans la section d'alimentation de la charge de matière à garniture; en ce que l'extrudeuse (10) comporte une pluralité d'orifices d'extrusion (112) disposés annulairement au-dessus de trajet en arc de cercle correspondant à ladite forme en arc et une pluralité d'organes obturateurs (126) prévus en relation avec les orifices d'extrusion (112) respectifs; et en ce que lesdits orifices d'extrusion (112) et lesdits organes obturateurs (126) de ladite extrudeuse (10) tournent en continu en synchronisme avec la mouvement de la fermeture de récipient (4) en cours de transport le long de trajet en arc de cercle de sorte que chacun des orifices d'extrusion (112) se déplace en coordination verticale avec chacune des fermetures de récipient (4) transportées le long dudit trajet en arc de cercle.

7. Dispositif selon la revendication 6, caractérisé en ce que ledit moyen de transport de fermetures (6) et ladite extrudeuse (10) sont réalisés de telle sorte que, quand la fermeture de récipient pénètre sur la trajet en arc de cercle et coincide verticalement avec l'un des orifices d'extrusion (112) de ladite extrudeuse (10), la fermeture de récipient (4) est soulevée verticalement et la surface intérieure de la fermeture de récipient (4) est amenée au contact ou auprès de l'extrémité inférieure dudit orifice d'extrusion (112) et, simultanément, l'obturateur (126) prévu en relation avec ledit orifice d'extrusion (112) est déplacé pour ouvrir ledit orifice d'extrusion (112), de sorte que la charge de matière à garniture annulaire (240) est extrudée à partir dudit orifice d'extrusion (112) et poussée contre une position déterminée à l'intérieur de la fermeture de récipient (4), après quoi l'organe obturateur (126) est déplacé pour fermer l'orifice d'extrusion (112) et la fermeture de récipient (4) est amenée à descendre verticalement.

8. Dispositif de façonnage d'une garniture dans une fermeture de récipient (4), ce dispositif comportant un moyen de transport des fermetures de récipient (6) pour transporter les fermetures de récipient (4) à garnir suivant un trajet prédéterminé; une extrudeuse (300) pour extruder une charge de matière à garniture (324) à l'état chauffé et fondu sous une forme annulaire comportant un moyen de chauffage (306, 308) pour fondre la charge de matière à garniture et un orifice d'extrusion annulaire (304); et un outil de moulage (238) pouvant agit sur la charge de matière à garniture annulaire (324) située dans la fermeture de récipient (4), ledit outil de moulage (238) présentant un espace de circulation (242) à travers lequel un agent de refroidissement peut être mis en circulation, caractérisé en ce qu'il comporte encore un moyen de transport de la charge de matière à garniture (302) pour sectionner au niveau de l'orifice d'extrusion (304) la charge de matière à garniture annulaire (324) extrudée à partir de l'orifice d'extrusion (304) de ladite extrudeuse, transporter la charge de matière à garniture sectionnée (324) jusqu'à une fermeture de récipient (4) amenée à la section d'alimentation de la charge de matière à garniture par ledit moyen de transport de fermetures (6), et la mettre en place à un endroit prédéterminé dans la fermeture de récipient (4), et une machine à mouler (12) pour mouler la charge de matière à garniture annulaire (324) située dans la fermeture de récipient (4) sous la forme souhaitée pendant qu'elle est encore en fusion, en ce que la fermeture de récipient (4) est transportée à une section de moulage de la charge de matière à garniture à partir de la section d'alimentation de la charge de matière à garniture par ledit moyen de transport de fermeture (6) après la mise en place de la charge de matière à garniture annulaire (324) dans la fermeture de récipient (4), et en ce que ledit moyen de transport de fermetures (6) est réalisé de façon à transporter la fermeture de récipient (4) à une section (8) de chauffage de la fermeture de récipient (4) avant de transporter la fermeture de récipient (4) à ladite section d'alimentation de la charge de matière à garniture.

9. Dispositif selon la revendication 8, caractérisé en ce que ledit orifice d'extrusion (304) de ladite extrudeuse (300) est dirigé verticalement vers le haut, le moyen de transport de la charge de matière à garniture (302) présentant un logement de réception de la charge de matière à garniture annulaire (320) dirigé verticalement vers le bas, ledit logement (320) étant amené à descendre verticalement et étant placé sur la charge de matière à garniture annulaire (324) extrudée à partir de l'orifice d'extrusion (304 de ladite extrudeuse (300), le logement de réception de la charge de matière à garniture (320) étant ensuite écarté horizontalement de l'orifice d'extrusion (304), de sorte que la charge de matière à garniture annulaire (324) extrudée à partir de l'orifice d'extrusion (304) est séparée par sectionnement de l'orifice d'extrusion (304) et retenue dans le logement de réception de la charge de matière à garniture (320), après quoi le logement (320) est mis en concordance avec le fermeture de récipient (4) amenée à ladite section d'alimentation de la charge de matière à garniture et la charge de matière à garniture annulaire (324) retenue dans le logement (320) est mis en place à l'endroit prédéterminé dans la fermeture de récipient (4).

10. Dispositif selon la revendication 9, caractérisé en ce que ledit moyen de transport de la charge de matière à garniture (302) comporte un moyen de mise sous vide (322) pour mettre sélectivement sous vide ledit logement de réception de la charge de matière à garniture (320) dudit moyen de transport de la charge de matière à garniture (302), la surface de fond dudit logement (320) étant délimitée par la surface d'extrémité inférieure d'un élément (318) mobile verticalement indépendamment d'éléments (314, 316) délimitant les parois latérales dudit logement (320), et en ce que quand ledit logement (320) est placé au-dessus de la charge de matière à garniture annulaire (324) extrudée à partir de l'orifice d'extrusion (304) de ladite extrudeuse (300), le vide est appliqué audit logement (320) par ledit moyen de mise sous vide (322), et quand ledit logement (320) est mis en coincidence avec la fermeture de récipient (4), la mise sous vide dudit logement (322) est interrompue et simultanément ledit élément (318) dont la surface d'extrémité inférieure délimite la surface à fond dudit logement (320) est amené à descendre verticalement, ce par quoi la charge annulaire de matière à garniture (324) est transférée dudit logement (320) à l'intérieur de ladite fermeture de récipient (4) et est poussée contre une position prédéterminée à l'intérieur de la fermeture de récipient (4).

**Patentansprüche**

1. Verfahren zum Formen einer Auskleidung in einem Behälterverschluß (4), bei dem ein Behälterverschluß (4) in eine Auskleidungsmaterial-Zufuhrstellung verbracht, ein Auskleidungsmaterial (240 oder 324) in erwärmtem und geschmolzenem Zustand von einer Extrudiervorrichtung (10 oder 300) zu Ringform extrudiert, das ringförmige Auskleidungsmaterial (240 oder 324) in einer vorbestimmten Position in dem Behälterverschluß (4) positioniert, das in dem Behälterverschluß (4) positionierte ringförmige Auskleidungsmaterial noch im Schmelzzustand zu der gewünschten Form gepreßt und das ringförmige Auskleidungsmaterial (240 oder 324) durch Zirkulation eines Kühlmittels in einem Preßwerkzeug (212), während des Pressens des ringförmigen Auskleidungsmaterials (240 oder 324) gekühlt wird, dadurch gekennzeichnet, daß der Behälterverschluß (4) zu einer Auskleidungsmaterial-Zuführstation verbracht wird, an der das ringförmige Auskleidungsmaterial (240 oder 324) in dem Behälterverschluß (4) positioniert wird, daß der Behälterverschluß (4) mit dem darin befindlichen ringförmigen Auskleidungsmaterial (240 oder 324) dann von der Auskleidungsmaterial-Zuführstation zu einer Auskleidungsmaterial-Preßstation verbracht wird, wo das ringförmige Auskleidungsmaterial (240 oder 324) zur gewünschten Form gepreßt wird, und daß der Behälterverschluß (4) vor dem Positionieren des ringförmigen Auskleidungsmaterials (240 oder 324) darin erwärmt wird.

2. Verfahren nach Anspruch 1, dadurch gekennzeichnet, durch Extrudieren der Auskleidungsmaterialschmelze (24) zu Ringform direkt aus der Extrudiervorrichtung (10) in den Behälterverschluß (4) das ringförmige Auskleidungsmaterial (240) in der vorbestimmten Position im Behälterverschluß (4) positioniert wird.

3. Verfahren nach Anspruch 1, dadurch gekennzeichnet, daß durch Fördern des aus der Extrudiervorrichtung (300) extrudierten ringförmigen Auskleidungsmaterials (324) mittels eines Förderers (302) das ringförmige Auskleidungsmaterial (324) in der vorbestimmten Position im Behälterverschluß (4) positioniert wird.

4. Einrichtung zum Formen einer Auskleidung in einem Behälterverschluß (4), mit einem Behälterverschluß-Förderer (6), der auszukleidende Behälterverschlüsse (4) auf einer vorbestimmten Bahn fördert, mit einer Extrudiervorrichtung (10), die ein Auskleidungsmaterial (240) in erwärmten und geschmolzenem Zustand in Ringform in einen Behälterverschluß (4), der von dem Behälterverschluß-Förderer (6) in eine Auskleidungsmaterial-Zuführstellung verbracht wurde, extrudiert und das ringförmige Auskleidungsmaterial (240) in vorbestimmter Lage im Behälterverschluß positioniert, wobei die Extrudiervorrichtung (10) eine Heizeinheit (68, 150, 154, 166, 167) zum Schmelzen des Auskleidungsmaterials, mindestens eine dem Behälterverschluß (4) in der Auskleidungsmaterial-Zuführstellung gegenüberliegende ringförmige Extrudieröffnung (112) sowie ein Absperrorgan (126) zum Schließen oder Öffnen der Extrudieröffnung (112) aufweist; und mit einem Formwerkzeug (238), das mit dem ringförmigen Auskleidungsmaterial (240) im Behälterverschluß (4) in Kontakt bringbar ist, wobei das Formwerkzeug (238) einen Zirkulationsraum (242) aufweist, durch den eine Kühlmittel zirkuliert, dadurch gekennzeichnet, daß die Einrichtung ferner eine gesonderte Formteilpresse (12) zum Formen des noch geschmolzenen ringförmigen Auskleidungsmaterials (240) in dem Behälterverschluß (4) zu der erwünschten Form aufweist, daß der Behälterverschluß (4) nach der Positionierung des ringförmigen Auskleidungsmaterials (240) im Behälterverschluß (4) von dem Behälterverschluß-Förderer (6) von einer Auskleidungsmaterial-Zuführstation zu einer Auskleidungsmaterial-Formstation gefördert wird, und daß der Behälterverschluß-Förderer (6) so aufgebaut ist, daß er den Behälterverschluß (4) vor dem Verbringen zu der Auskleidungsmaterial-Zuführstation zu einer Station (8) verbringt, wo der Behälterverschluß (4) erwärmt wird.

5. Einrichtung nach Anspruch 4, dadurch gekennzeichnet, daß das Absperrorgan (126) der Extrudiervorrichtung (10) en seinem vorderen Endabschnitt ein ringförmiges zu öffnendes und zu schließendes Ventil (130) aufweist, das in der Extrudiervorrichtung (10) in einer ringförmigen Extrudierbohrung (120), die bis zu der Extrudieröffnung (112) verläuft, gleitverschiebbar ist zwischen seiner Schließstellung, in der es die Extrudieröffnung (112) von innen schließt, und seiner Offenstellung, in der es aus der Schließstellung zurückgezogen ist und die Extrudieröffnung (112) öffnet.

6. Einrichtung nach Anspruch 4 oder 5, dadurch gekennzeichnet, daß der Behälterverschluß-Förderer (6) so ausgebildet ist, daß et die Behälterverschlüsse (4) kontinuierlich längs einer im wesentlichen gekrümmten Bahn an der Auskleidungsmaterial-Zuführstation fördert; daß die Extrudiervorrichtung (10) eine Mehrzahl Extrudieröffnungen (112), die ringförmig über der der gewölbten Form entsprechenden gewölbten Bahn angeordnet sind, sowie eine Mehrzahl Absperrorgane (126), die relativ zu den jeweiligen Extrudieröffnungen (112) angeordnet sind, umfaßt; und daß die Extrudieröffnungen (112) und die Absperrorgane (126) der Extrudiervorrichtung (10) kontinuierlich synchron mit der Bewegung des auf der gekrümmten Bahn geförderten Behälterverschlusses (4) gedreht werden, so daß sich jede Extrudieröffnung (112) in Koordination mit jedem durch die gekrümmte Bahn in senkrechter Richtung geförderten Behälterverschluß (4) bewegt.

7. Einrichtung nach Anspruch 6, dadurch gekennzeichnet, daß der Behälterverschluß-Förderer (6) und die Extrudiervorrichtung (10) so aufgebaut sind, daß, wenn der Behälterverschluß (4) in die gekrümmte Bahn eintritt und mit einer Extrudieröffnung (112) der Extrudiervorrichtung (10) in Deckung liegt, der Behälterverschluß (4) in senkrechter Richtung gehoben und die Innenfläche der Behälterverschlusses (4) in Kontakt mit dem oder in die Nähe des Unterendes der Extrudieröffnung (112) gebracht wird, wobei gleichzeitig das der Extrudieröffnung (112) zugeordnete Absperrorgan (126) so bewegt wird, daß es die Extrudieröffnung (112) öffnet, so daß das ringförmige Auskleidungsmaterial (240) aus der Extrudieröffnung (112) extrudiert und gegen eine vorbestimmte Lage im Behälterverschluß (4) gedrückt wird, wonach das Absperrorgan (126) verschoben wird und die Extrudieröffnung (112) schließt und der Behälterverschluß (4) senkrecht nach unten bewegt wird.

8. Einrichtung zum Formen einer Auskleidung in einem Behälterverschluß (4), mit einem Behälterverschluß-Förderer (6), der auszukleidende Behälterverschlüsse (4) auf einer vorbestimmten Bahn fördert; mit einer Extrudiervorrichtung (300) zum Extrudieren eines Auskleidungsmaterials (324) in erwärmten und geschmolzenem Zustand zu Ringform, umfassend eine Heizeinheit (306, 308) zum Schmelzen des Auskleidungsmaterials und eine ringförmige Extrudieröffnung (304); und mit einem Formwerkzeug (238), das mit dem Ringförmigen Auskleidungsmaterial (324) im Behälterverschluß (4) in Anlage bringbar ist und einen Zirkulationsraum (242) aufweist, durch den ein Kühlmittel zirkuliert, dadurch gekennzeichnet, die Einrichtung ferner aufweist einen Auskleidungsmaterial-Förderer (302), der das aus der Extrudieröffnung (304) der Extrudiervorrichtung extrudierte Auskleidungsmaterial (324) an der Extrudieröffnung (304) abschneidet, das abgeschnittene Auskleidungsmaterial (324) zu einem von dem Behälterverschluß-Förderer (6) zu einer Auskleidungs-Zuführungsstation verbrachten Behälterverschluß (4) fördert und es an einer vorbestimmten Stelle im Behälterverschluß (4) positioniert, sowie eine Formteilpresse (12) zum Formen des im Behälterverschluß (4) befindlichen ringförmigen Auskleidungsmaterials (324) zur erwünschten Form in noch geschmolzenem Zustand, daß der Behälterverschluß (4) nach dem Positionieren des ringförmigen Auskleidungsmaterials (324) in ihm von dem Behälterverschluß-Förderer (6) von der Auskleidungsmaterial-Zuführstation zu einer Auskleidungsmaterial-Formstation gefördert wird, und daß der Behälterverschluß-Förderer (6) so ausgebildet ist, daß er vor dem Fördern des Behälterverschlusses (4) zu der Auskleidungsmaterial-Zuführstation diesen zu einer Station (8) zum Erwärmen des Behälterverschlusses (4) fördert.

9. Einrichtung nach Anspruch 8, dadurch gekennzeichnet, daß die Extrudieröffnung (304) der Extrudiervorrichtung (300) senkrecht nach oben gerichtet ist, daß der Auskleidungsmaterial-Förderer (302) eine senkrecht nach unten gerichtete ringförmige Auskleidungsmaterial-Aufnahmevertiefung (320) aufweist, daß diese Vertiefung (320) in senkrechter Richtung abwärts bewegbar und über aus der Extrudieröffnung (304) der Extrudiervorrichtung (300) gepreßte ringförmige Auskleidungsmaterial (324) bringbar ist, daß die Auskleidungsmaterial-Aufnahmevertiefung (320) dann horizontal zur Extrudieröffnung (304) bewegbar ist, so daß das aus der Extrudieröffnung (304) extrudierte ringförmige Auskleidungsmaterial (324) an der Extrudieröffnung (304) abgeschnitten und in der Auskleidungsmaterial-Aufnahmevertiefung (320) gehalten wird, wonach die Aufnahmevertiefung (320) mit dem zur Auskleidungsmaterial-Zuführstation geförderten Behälterverschluß (4) in Ausrichtung gebracht und das in der Aufnahmevertiefung (320) gehaltene ringförmige Auskleidungsmaterial (324) an der vorbestimmten Stelle im Behälterverschluß (4) positionierbar ist.

10. Einrichtung nach Anspruch 9, dadurch gekennzeichnet, daß der Auskleidungsmaterial-Förderer (302) eine Unterdruckversorgung (322) zur selektiven Unterdruckzuführung zu der Auskleidungsmaterial-Aufnahmevertiefung (320) des Auskleidungsmaterial-Förderers (302) aufweist, wobei die Bodenfläche der Aufnahmevertiefung (320) durch die untere Endfläche eines Teils (318) gebildet ist, das unabhängig von die Seitenwandungen der Aufnahmevertiefungen (320) bildenden Teilen (314, 316) senkrecht bewegbar ist, und daß, wenn die Aufnahmevertiefung (320) über das aus der Extrudieröffnung (304) der Extrudiervorrichtung (300) extrudierte ringförmige Auskleidungsmaterial (324) gebracht wird, die Aufnahmevertiefung (320) von der Unterdruckversorgung (322) mit Unterdruck beaufschlagt wird und, wenn die Aufnahmevertiefung (320) mit dem Behälterverschluß (4) in Deckung gebracht ist, die Unterdruckbeaufschlagung der Aufnahmevertiefung (320) durch die Unterdruckversorgung (322) abgebrochen wird, wobei gleichzeitig das Teil (318), dessen untere Endfläche der Bodenfläche der Aufnahmevertiefung (320) bildet, senkrecht abwärtsbewegbar ist, so daß das ringförmige Auskleidungsmaterial (324) aus der Aufnahmevertiefung (320) in das Innere des Behälterverschlusses (4) überführt und in eine vorbestimmte Lage an der Innenseite des Behälterverschlusses (4) gedrückt wird.

FIG. 1

FIG. 2-b

FIG. 2-a

0012314

FIG. 3

3

0012314

FIG. 4

118

114

4

120

130

56

112

54

234

232   FIG. 6

224

228

222

230

228

226

4

0012314

FIG. 5

5

FIG. 7

FIG. 8-a

FIG. 8-b

FIG. 8-c